Europäisches Patentamt

European Patent Office

Office européen des brevets

(19)

(11) Publication number: **0 206 563**
A2

# (12) EUROPEAN PATENT APPLICATION

(21) Application number: **86304157.0**

(22) Date of filing: **02.06.86**

(51) Int. Cl.⁴: **F 16 H 3/08**

(30) Priority: **24.06.85 US 747793**

(43) Date of publication of application: **30.12.86**
**Bulletin 86/52**

(84) Designated Contracting States: **DE FR GB IT**

(71) Applicant: **GENERAL MOTORS CORPORATION,**
**General Motors Building 3044 West Grand Boulevard,**
**Detroit Michigan 48202 (US)**

(72) Inventor: **Nagy, Laszlo, 482 Lake Forest, Rochester**
**Michigan 48063 (US)**

(74) Representative: **Breakwell, John Neil Bower et al, GM**
**Patent Section Luton Office (F6) P.O. Box No. 3 Kimpton**
**Road, Luton Beds. LU2 0SY (GB)**

(54) **Multi-ratio countershaft transmission.**

(57) A stepped-ratio countershaft-type power transmission provides a plurality of drive ratios between an input shaft and an output shaft. The power transmission, in addition to the input and output shafts, has a countershaft (34) on which a plurality of ratio gears (40, 42, 48) are rotatably mounted. The input shaft (14) has at least one ratio gear (22, 24, 26) rotatably mounted thereon, and the output shaft (52) has at least one gear (60, 62, 64) secured thereto, in an arrangement in which a cluster gear is secured to either the input shaft or the output shaft and the other of these shafts has rotatably mounted thereon one or more ratio gears. At least one of the ratio gears on the input shaft serves as an idler gear for one or more of the ratio gears on the countershaft.

# MULTI-RATIO COUNTERSHAFT TRANSMISSION

This invention relates to a multi-ratio countershaft transmission as specified in the preamble of claim 1, for example as disclosed in US-A-4 174 644.

With an increase in the number of vehicles having a transversely arranged front wheel drive and having a reduced dimension between the front wheels, there is a need to maintain or reduce the axial length of the transmission mechanism. It is also desirable to increase the number of speed ratios which are available during operation of the transmission.

To this end a multi-ratio countershaft transmission in accordance with the present invention is characterised by the features specified in the characterising portion of claim 1.

The present invention thereby makes available a gearing arrangement within a countershaft-type power transmission having an axial length which is the same as, or slightly less than, that of prior-art transmissions as exemplified by the disclosure of the said US-A-4 174 644, while also permitting an increase in the number of forward speed ratios, for example from four to five.

Thus a feature of a multi-ratio countershaft transmission in accordance with the present invention is that at least one ratio gear rotatably disposed on the input shaft acts as an idler gear between a ratio gear on the countershaft and an output gear secured for rotation with the output shaft.

A pair of selectively engageable clutch members may be operable to connect the ratio gears to their respective shaft members.

In the drawing:

Figure 1 is a diagrammatic representation of one embodiment of a multi-ratio countershaft transmission in accordance with the present invention;

Figure 2 is a diagrammatic representation of another embodiment of a multi-ratio countershaft transmission in accordance with the present invention; and

Figure 3 is a diagrammatic representation of a further embodiment of a multi-ratio countershaft transmission in accordance with the present invention.

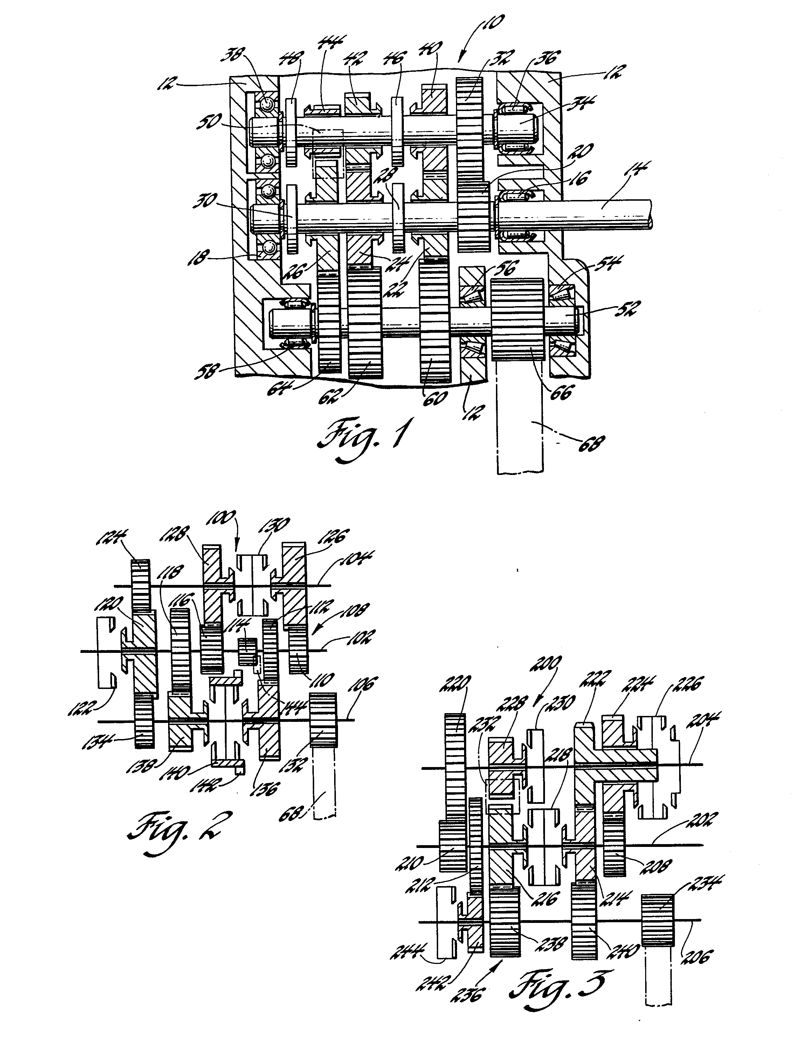

With reference now to the drawing, wherein like characters represent like or corresponding parts throughout the several views, there is seen in Figure 1 a power transmission, generally designated 10, having a transmission housing (case) 12 in which is rotatably disposed an input shaft 14. The input shaft 14 is mounted on a needle or roller bearing 16 and a ball bearing 18. The input shaft 14 has a transfer gear (head gear) 20 secured for rotation therewith, and a plurality of ratio gears 22, 24 and 26 rotatably mounted thereon. The ratio gears 22 and 24 can be selectively connected for rotation with the input shaft 14 by a conventional synchronizer clutch 28, whereas the ratio gear 26 is selectively connectible for rotation with the input shaft 14 by means of a synchronizer clutch 30. The synchronizer clutches 28 and 30 and other synchronizer clutches which will be referred to during the subsequent description of the embodiments are conventional well-known mechanisms that are generally operated by shift lever and shift fork mechanisms, which are also well-known. Manual shift controls, including a shift lever and forks, as conventional in countershaft-type transmissions, prevent the simultaneous engagement of more than one synchronizer clutch at any given time.

The transfer gear 20 meshes with a transfer gear (head gear) 32 which is secured for rotation with a countershaft 34 that is rotatably supported in the transmission housing 12 on a roller bearing 36 and a ball bearing 38. Since the transfer gears 20 and 32 are secured to their respective shaft members 14 and 34, the countershaft 34 will rotate whenever the input shaft 14 is rotated.

The countershaft 34 has rotatably disposed thereon a plurality of ratio gears 40, 42 and 44. The ratio gears 40 and 42 are selectively connectible to the countershaft 34 for rotation therewith by means of a synchronizer clutch assembly 46, and the ratio gear 44 is selectively connectible to the countershaft 34 by means of a synchronizer clutch assembly 48. The ratio gear 40 is in continuous mesh with the ratio gear 22, and the ratio gear 42 is in continuous mesh with the ratio gear 24. The ratio gear 44 meshes with a reverse idler gear 50, shown in phantom, which in turn meshes with the ratio gear 26.

An output shaft 52 is rotatably supported in the housing 12 by means of a pair of tapered roller bearings 54 and 56 and a needle roller bearing 58. The output shaft 52 has fixed thereon gear members 60, 62 and 64, in a gear arrangement that is quite often referred to as a cluster gear since in general practice the three gears are made integral with one another and then the resulting gear cluster is assembled for rotation with the shaft member.

The gear member 60 meshes with the ratio gear 22, the gear member 62 meshes with the ratio gear 24, and the gear member 64 meshes with the ratio gear 26. The output shaft 52 also has secured thereto an output gear member 66 that meshes with a ring gear 68, shown in phantom, which is a component of a conventional differential gear set, not shown.

By appropriate selection and engagement movement of the synchronizer clutch mechanisms 28, 30, 46 and 48, the transmission 10 can be operated to provide five forward speed ratios and one reverse speed ratio. The first, lowest speed ratio is provided when the synchronizer mechanism 46 engages the ratio gear 40: when this occurs, power flows from the input shaft 14 by way of the transfer gears 20 and 32 to the countershaft 34 and therefore the ratio gear 40. The ratio gear 40 rotates the ratio gear 22, which acts as an idler and in turn rotates the gear member 60 and therefore the output shaft 52.

A second gear or speed ratio is established by engaging the synchronizer clutch assembly 46 with the ratio gear 42. The rotation of the input shaft 14 is transmitted by way of the transfer gears 20 and 32 to the ratio gear 42, which in turn rotates the ratio gear 24. The ratio gear 24, acting as an idler, rotates the gear 62, which in turn rotates the output shaft 52.

A third gear or speed ratio is established by selective engagement of the synchronizer clutch 28 with the ratio gear 22. During third gear operation, the input shaft 14 rotates the ratio gear 22 by way of the synchronizer clutch 28. The ratio gear 22 rotates the gear 60, which in turn rotates the output shaft 52.

A fourth gear or speed ratio is established by selective engagement of the synchronizer clutch 28 with the ratio gear 24 such that rotation of the input shaft 14 is transmitted to the output shaft 52 by way of the gears 24 and 62.

A fifth gear or speed ratio is established by selective engagement of the synchronizer clutch 30 with the ratio gear 26. In fifth gear operation, the rotation of the input shaft 14 is transmitted to the output shaft 52 by the operation of the gears 26 and 64.

A reverse gear ratio is established by selective engagement of the synchronizer clutch 48 with the ratio gear 44. During reverse gear operation, rotation of the input shaft 14 is reversed in sense and transmitted to the output shaft 52 by the action of the ratio gear 44, the reverse idler gear 50, the ratio gear 26 and the gear member 64. During reverse ratio drive there are two idler gears provided, namely the gears 50 and 26.

During first and second gear operation, the ratio gears 22 and 24 respectively provide idler gear operation. Without the use of the ratio gears 22, 24 and 26 as idler gear members, the length of the transmission 10 would have to be increased to accommodate an increased number of ratio gears on the input shaft 14, and a corresponding increase in the length of the cluster gear disposed on the output shaft 52.

In Figure 2 there is seen a power transmission 100 which has an input shaft 102, a countershaft 104 and an output shaft 106. The input shaft 102 has rotatably secured thereto a cluster gear which is generally designated 108 and comprises gear members 110, 112, 114, 116 and 118. If desired, one or more of these gears 110 to 118 could be individually secured to the input shaft 102. There is also rotatably mounted on the input shaft 102 a ratio gear 120 which is selectively connectible thereto by means of a synchronizer clutch 122. The countershaft 104 has rotatably secured thereto a transfer gear 124 which meshes with the ratio gear 120. Rotatably mounted on the countershaft 104 is a pair of ratio gears 126 and 128 which mesh with the gears 110 and 116 respectively. The ratio gears 126 and 128 are selectively connectible for rotation with the countershaft 104 by means of a synchronizer clutch assembly 130. The output shaft 106 has rotatably secured thereto an output gear 132 and a transfer gear 134. Rotatably mounted on the output shaft 106 is a pair of ratio gears 136 and 138 which mesh with the gears 112 and 118 respectively. The gears 136 and 138 are selectively connectible to the output shaft 106 by means of a synchronizer clutch assembly 140. The synchronizer clutch assembly 140 has formed integrally therewith a gear member 142 that is adapted to mesh with a reverse idler gear 144, shown in phantom, which meshes with the gear 114. When a reverse drive ratio is desired in the transmission 100, the gear 144 is shifted into mesh with the gear 142 so that rotation of the input shaft 102 is transmitted by way of the gears 114, 144 and 142 to the output shaft 106.

The gearing arrangement of the transmission 100 provides the first, lowest gear ratio by engagement of the synchronizer clutch 130 with the ratio gear 126. During first gear operation, rotation of the input shaft 102 is transmitted by way of the gear 110, the ratio gear 126, the countershaft 104, the transfer gear 124, the ratio gear 120 and the transfer gear 134 to the output shaft 106.

A second gear ratio is provided in the transmission 100 by engagement of the synchronizer clutch 130 with the ratio gear 128. During second gear operation, rotation of the input shaft 102 is transmitted to the output shaft 106 by way of the gear 116, the ratio gear 128, the countershaft 104, the transfer gear 124, the ratio gear 120 and the transfer gear 134.

During both first and second ratios, the ratio gear 120, rotatably disposed on the input shaft 102, operates as an idler gear between the countershaft 104 and the output shaft 106. The third and fourth gear ratios are established by the engagement of the synchronizer clutch 140 with the ratio gears 136 and 138 respectively. The fifth and highest gear ratio of the transmission is established by engagement of the synchronizer clutch 122 with the ratio gear 120. The torque paths in the third to fifth ratios are conventional and will be evident without a detailed description.

In Figure 3 there is seen a power transmission, generally designated 200, having an input shaft 202, a countershaft 204 and an output shaft 206. The input shaft 202 has rotatably secured thereto three transfer gears 208, 210 and 212. Rotatably mounted on the input shaft 202 there is a pair of ratio gears 214 and 216: the ratio gears 214 and 216 can be selectively connected to the input shaft 202 by means of a synchronizer clutch assembly 218.

The countershaft 204 has secured thereto a transfer gear 220 which meshes with the transfer gear 210. Rotatably mounted on the countershaft 204 there is a pair of ratio gears 222 and 224. The gear 222 is selectively connectible to the countershaft 204 by means of a synchronizer clutch assembly 226, and the gear 224 is selectively connectible to the gear 222 by means of the synchronizer clutch assembly 226.

The ratio gears 222 and 224 mesh with the ratio gear 214 and the transfer gear 208 respectively. Also rotatably disposed on the countershaft 204 is a ratio gear 228 that is selectively connectible to the countershaft 204 by means of a synchronizer clutch 230. The ratio gear 228 is in mesh with a reverse idler gear, shown in phantom at 232, which in turn meshes with the ratio gear 216.

The output shaft 206 has secured thereto an output gear 234 and a cluster gear, the cluster gear being designated 236 and comprising gears 238 and 240. Rotatably disposed on the output shaft 206 is a ratio gear 242 that is selectively connectible to the output shaft 206 by means of a synchronizer clutch 244.

To establish the first, lowest ratio, the synchronizer clutch assembly 226 is manipulated to selectively connect the ratio gear 222 to the countershaft 204. During first gear operation, the rotation of the input shaft 202 is transmitted to the output shaft 206 via the transfer gears 210 and 220, the countershaft 204, the ratio gears 222 and 214, and the gear 240. During operation of this drive ratio, the ratio gear 214 acts as an idler gear.

To establish the second gear ratio in the transmission 200, the synchronizer clutch assembly 226 is manipulated to connect the ratio gear 224 to the ratio gear 222. During second gear operation, the rotation of the input shaft 202 is transmitted to the output shaft 206 via the transfer gear 208, the ratio gear 224, the ratio gear 222, the ratio gear 214 and the gear 240. During second gear operation the ratio gear 214 again acts as an idler gear.

Third, fourth and fifth gear operation are obtained by selective engagement of the synchronizer

-9-          0206563

clutch assembly 218 with the ratio gears 214 and 216 and of the synchronizer clutch 244 with the ratio gear 242, respectively. These ratios and the gear meshes which provide them are straight-forward, such that a more detailed description of the drive path appears unnecessary.

The reverse drive ratio is established by manipulating the synchronizer clutch 230 to connect the ratio gear 228 to the countershaft 204. During reverse drive operation, the rotation of the input shaft 202 is transmitted to the output shaft 206 by way of the transfer gear 210, the transfer gear 220, the ratio gear 228, the reverse idler gear 232, the ratio gear 216 and the gear 238. During reverse operation the ratio gear 216 acts as an idler gear.

In each of the above-described embodiments, in at least one forward gear ratio a ratio gear that is rotatably disposed on the input shaft provides an idler gear action between gears on the countershaft and on the output shaft. It is the use of this idler gear operation which permits the axial length of the transmission mechanism to remain the same or even be shortened while also permitting the addition of one more gear ratios in the transmission mechanism.

Thus a multi-ratio countershaft transmission in accordance with the present invention can provide a maximum number of speed ratios in a minimum axial distance. The functioning of certain of the ratio gears as idler gears significantly contributes to this advantageous result.

Claims:

1. A multi-ratio countershaft transmission in which an output shaft (52) is disposed parallel to and axially displaced from an input shaft (14), a countershaft (34) is disposed parallel to and axially displaced from both the input shaft (14) and the output shaft (52), a plurality of meshing gearwheels are carried by the respective shafts (14,34,52), and selectively engageable clutch means are arranged to effect selective connection of the gearwheels to the shafts to establish a plurality of stepped drive ratios between the input and output shafts (14,52), characterised in that gear means (20,32) are operatively connected to the input shaft (14) and the countershaft (34) respectively to form transfer gear means, at least one ratio gear means (22) is rotatably mounted on the input shaft (14), cluster gear means (60,62,64) is drivingly connected to one (52) of the input shaft (14) and the output shaft (52), ratio gear means (22,24,26) are rotatably disposed on the other (14) of the input shaft (14) and the output shaft (52) and mesh with the cluster gear means (60,62,64), ratio gear means (40,42) are rotatably disposed on the countershaft (34) and are operatively connected in meshing relation with respective ones of the gear means (22,24) on the input shaft (14), the selectively engageable clutch means (46,28,30) are effective to selectively connect the individual ratio gear means (22,24,26,40,42) to the respective shafts (14,34) for rotation therewith for providing a plurality of distinct gear ratios between the input shaft (14) and the output shaft (52), and at least one of the ratio gear means (22,24,26) on the input shaft (14) forms idler gear means for respective ratio gear means (40,42) on the countershaft (34).

2. A multi-ratio countershaft transmission according to claim 1, characterised in that the transfer gear means (20,32) are drivingly connected to the input shaft (14) and to the countershaft (34) respectively to form a head gear set, the cluster gear means (60,62,64) is drivingly connected to the output shaft (52), three ratio gear means (22,24,26) as aforesaid are rotatably disposed on the input shaft (14) and mesh with respective gears of the cluster gear means (60,62,64), three ratio gear means (40,42,44) as aforesaid are rotatably disposed on the countershaft (34) and mesh with respective ones of the ratio gear means (22,24,26) on the input shaft (14), the selectively engageable clutch means (28,30) include clutch means (46,48) mounted on the input shaft (14) and clutch means (46,48) mounted on the countershaft (34), and the three ratio gear means (22,24,26) on the input shaft (14) form idler gear means for respective ones of the three ratio gear means (40,42,44) on the countershaft (34).

Fig. 1

Fig. 2

Fig. 3